# EUROPEAN PATENT SPECIFICATION

(11) **EP 3 730 844 B1**
(45) Date of publication and mention of the grant of the patent: **01.05.2024**
(21) Application number: 20158470.3
(22) Date of filing: 20.02.2020
(51) Int. Cl.: F24D 19/10, F24D 17/02, F24D 3/18, F24D 3/08

(54) **HEATING AND HOT WATER SUPPLY SYSTEM**
HEIZUNGS- UND WARMWASSERVERSORGUNGSSYSTEM
CHAUFFAGE ET SYSTÈME D'ALIMENTATION EN EAU CHAUDE

(30) Priority: 25.04.2019 JP 2019083531
(43) Date of publication of application: 28.10.2020
(73) Proprietor: Panasonic Intellectual Property Management Co., Ltd., Osaka-shi, Osaka 540-6207 (JP)
(72) Inventor: ISAYAMA, Yasuhiko, Osaka, 540-6207 (JP); YAMAOKA, Yuki, Osaka, 540-6207 (JP); IMAGAWA, Tsuneko, Osaka, 540-6207 (JP)
(74) Representative: Eisenführ Speiser

(56) References cited:
- EP-A1- 2 249 098
- EP-A1- 3 115 711
- EP-A1- 3 225 922
- EP-A1- 3 258 185
- EP-A2- 2 538 146
- US-B2- 9 140 464

## Description

### [TECHNICAL FIELD]

The present invention relates to a heating and hot water supply system.

### [BACKGROUND TECHNIQUE]

According to a conventional heating and hot water supply system of this kind, refrigerant and heat medium exchange heat with each other in a heat exchanger, and the heating and hot water supply system carries out a heating operation for heating a room by a heat medium which becomes high temperature, or carries out a hot water-storing operation for heating heat medium by another heat medium which becomes high temperature and for storing the hot water in a hot water tank (see patent document 1 for example).

Patent document 2 describes a hot-water storage type hot-water supply device that includes a heat pump unit for heating water, a hot-water storage tank for storing hot water heated by the heat pump unit, and a hot-water supplying heat exchanger placed so as to extend roughly entirely in a vertical direction thereof and which receives water from a lower side thereof and discharges hot water from an upper side thereof.

Patent document 3 describes that, when hot water supply and room heating are requested simultaneously, a hot water supply operation, by which energy saving is achieved without impairing the comfortability in a room, is performed. A heat-pump apparatus of a variable operation capacity type, a primary water circuit, a hot water tank, a room heater, and a controller are provided. The controller sets a hot water supply operation completion target time in the case of a request for a simultaneous hot water supply and room heating operation, based on a temperature difference between the outdoor air temperature and the indoor temperature, and determines the rotation speed of the compressor in the hot water supply operation completion target time set.

Patent documents 4 to 6 describe further heating and hot water supply apparati.

### [PRIOR ART DOCUMENTS]

### [PATENT DOCUMENTS]

[Patent Document1] PCT International Publication No.2013/084301
[Patent Documents] EP Patent Application Publication No.2 249 098 A1
[Patent Documents] EP Patent Application Publication No.3 115 711 A1
[Patent Document4] EP Patent Application Publication No.3 225 922 A1
[Patent Document5] EP Patent Application Publication No.3 258 185 A1
[Patent Documents] US Patent Publication No.9,140,464 B2

### [SUMMARY OF THE INVENTION]

### [PROBLEM TO BE SOLVED BY THE INVENTION]

However, the conventional configuration has a problem that if the hot water-storing operation is required when the heating operation is carried out, it is necessary to stop the heating operation, and usability and comfort are deteriorated.

The present invention has been accomplished to solve the conventional problem, and it is an object of the invention to provide a heating and hot water supply system capable of carrying out the heating operation and the hot water-storing operation at the same time, and capable of enhancing usability and comfort.

### [MEANS FOR SOLVING THE PROBLEM]

To solve the conventional problem, the present invention provides a heating and hot water supply system as defined in appended claim 1.

According to this, it is possible to provide a heating and hot water supply system capable of carrying out the heating operation and the hot water-storing operation at the same time, and capable of enhancing the usability and the comfort.

### [EFFECT OF THE INVENTION]

According to the present invention, by carrying out the hot water-storing operation when the heating operation is carried out, it is possible to provide a heating and hot water supply system which enhances the usability and the comfort.

### [BRIEF DESCRIPTION OF THE DRAWINGS]

Fig. 1 is a block diagram when a heating operation of a heating and hot water supply system according to a first embodiment of the present invention is carried out;
Fig. 2 is a block diagram when the heating operation and a hot water-storing operation of the heating and hot water supply system are carried out at the same time;
Fig. 3 is a flowchart of operation control of the heating and hot water supply system;
Fig. 4 is a block diagram when a heating operation and a hot water-storing operation of a heating and a hot water storing system according to a second embodiment of the invention are carried out at the same time; and
Fig. 5 is a block diagram when a heating operation and a hot water-storing operation of a heating and hot water supply system according to a third embodiment of the invention are carried out at the same time.

### [MODE FOR CARRYING OUT THE INVENTION]

The invention provides a heating and hot water supply system as defined in appended claim 1. It includes among others: a refrigerant circuit formed by annularly connecting a compressor, a usage-side heat exchanger, an expansion device and a heat source-side heat exchanger to one another, and refrigerant circulating through the refrigerant circuit; a heat medium circuit connected to a load-side heat exchanger, heat medium heated by the refrigerant in the usage-side heat exchanger being conveyed to the load-side heat exchanger by a circulation device, and the heat medium after it radiates heat in the load-side heat exchanger returning to the usage-side heat exchanger; a hot water-storing section provided in the heat medium circuit in parallel to the usage-side heat exchanger; and a control device, wherein the heating and hot water supply system carries out a heating operation in which the heat medium heated by the refrigerant in the usage-side heat exchanger radiates heat in the load-side heat exchanger, and a hot water-storing operation in which hot water is stored in the hot water-storing section by the heat medium heated by the refrigerant in the usage-side heat exchanger, the heating and hot water supply system includes a distributer which is provided on a connecting portion between the heat medium circuit and the hot water-storing section, the heat medium flows out from the usage-side heat exchanger, the distributer adjusts a distribution ratio of a flow rate of the heat medium flowing toward the hot water-storing section and a flow rate of the heat medium flowing toward the load-side heat exchanger, the control device adjusts the distribution ratio of the distributer, and the heating and hot water supply system includes an operation mode for carrying out the hot water-storing operation when the heating operation is carried out.

According to this, since the hot water-storing operation can be carried out when the heating operation is carried out, it is possible to provide a heating and hot water supply system in which usability and comfort are enhanced.

According to the invention, the heating and hot water supply system further includes a temperature sensor for detecting temperature of the heat medium which flows out from the usage-side heat exchanger, wherein the control device sets the distribution ratio of the distributer based on the temperature detected by the temperature sensor.

According to this, when a radiation amount (heating ability) of the load-side heat exchanger is larger than a heating load, the heating operation can also be carried out by redundant heating ability while executing the hot water-storing operation into a hot water-storing section. Therefore, it is possible to provide a heating and hot water supply system in which usability and comfort are enhanced.

According to an embodiment of the invention, the distributer is placed on a branch current portion by which a portion of the heat medium which flows out from the usage-side heat exchanger is separated into the hot water-storing section.

According to this, when the heating operation and the hot water-storing operation are carried out at the same time, a ratio of a flow rate of heat medium flowing out from the usage-side heat exchanger which flows into the hot water-storing section and a flow rate of the heat medium which flows into the load-side heat exchanger can directly be adjusted by the distributer. Therefore, it is possible to provide a heating and hot water supply system in which usability and comfort are enhanced.

According to an embodiment of the invention, the distributer is placed on a branch current portion where the heat medium which flows out from the load-side heat exchanger and the heat medium which flows out from the hot water-storing section join up with each other.

According to this, when the heating operation and the hot water-storing operation are carried out at the same time, since low temperature heat medium after it radiates heat in the load-side heat exchanger returns to the distributer, it is possible to suppress the temperature rise of the distributer, and it is possible to provide a heating and hot water supply system having excellent endurance.

According to an embodiment of the invention, when the temperature detected by the temperature sensor is smaller than predetermined temperature, the control device sets the distribution ratio of the distributer such that the flow rate of the heat medium which flows toward the load-side heat exchanger is increased.

When temperature detected by the temperature sensor is lower than predetermined temperature, it can be determined that a radiation amount (heating ability) of the load-side heat exchanger as compared with a heating load is small.

Therefore, in this case, a distribution ratio of the distributer is adjusted, a flow rate of heat medium flowing toward the load-side heat exchanger is increased. According to this, a radiation amount (heating ability) of the load-side heat exchanger is also increased. Therefore, it is possible to provide a heating and hot water supply system in which comfort is enhanced.

According to an embodiment of the invention, when the temperature detected by the temperature sensor is equal to or higher than predetermined temperature, the control device sets the distribution ratio of the distributer such that the flow rate of the heat medium which flows toward the hot water-storing section is increased.

When temperature detected by the temperature sensor is equal to or higher than the predetermined temperature, it can be determined that the radiation amount (heating ability) of the load-side heat exchanger as compared with the heating load is large.

Therefore, in this case, the distribution ratio of the distributer is adjusted, the flow rate of heat medium flowing toward the hot water-storing section is increased, that is, a flow rate of heat medium flowing toward the load-side heat exchanger is reduced. According to this, when the radiation amount (heating ability) of the load-side heat exchanger is larger than the heating load, the heating operation can be carried out by the redundant heating ability while also executing the hot water-storing operation into the hot water-storing section. Therefore, it is possible to provide a heating and hot water supply system in which usability and comfort are enhanced.

According to an embodiment of the invention, during a period when the compressor stops, the control device sets the distribution ratio of the distributer such that flow path resistance between the heat medium circuit and the hot water-storing section becomes maximum.

According to this, during a period when the compressor stops, since a flow path resistance between the heat medium circuit and the hot water-storing section is extremely large by the distributer 60, it is possible to suppress the outflow of high temperature heat medium in the hot water-storing section into a low temperature heat medium circuit, and it is possible to provide a heating and hot water supply system having excellent energy efficiency.

According to an embodiment of the invention, the circulation device is placed between the usage-side heat exchanger and a branch current portion where the heat medium which flows out from the load-side heat exchanger and the heat medium which flows out from the hot water-storing section join up with each other.

According to this, the circulation device can convey low temperature heat medium after it radiates heat in the load-side heat exchanger, and low temperature heat medium after it is utilized for supplying hot water in the hot water-storing section. Therefore, it is possible to provide a heating and hot water supply system having excellent endurance of the conveying device.

According to an embodiment of the invention, the hot water-storing section is composed of a hot water tank which stores the heat medium heated by the refrigerant in the usage-side heat exchanger.

According to this, high temperature hot water in the hot water tank can be utilized for heating hot water supply using the hot water supply heat exchanger.

According to an embodiment of the invention, the hot water-storing section is composed of a hot water-storing heat exchanger through which the heat medium heated by the refrigerant in the usage-side heat exchanger flows, and a hot water tank which stores hot water heated by the heat medium in the hot water-storing heat exchanger.

According to this, high temperature hot water in the hot water tank can be utilized for heating hot water supply using the hot water supply heat exchanger.

Embodiments of the present invention will be described below with reference to the drawings. The invention is not limited to the embodiments.

### (First Embodiment)

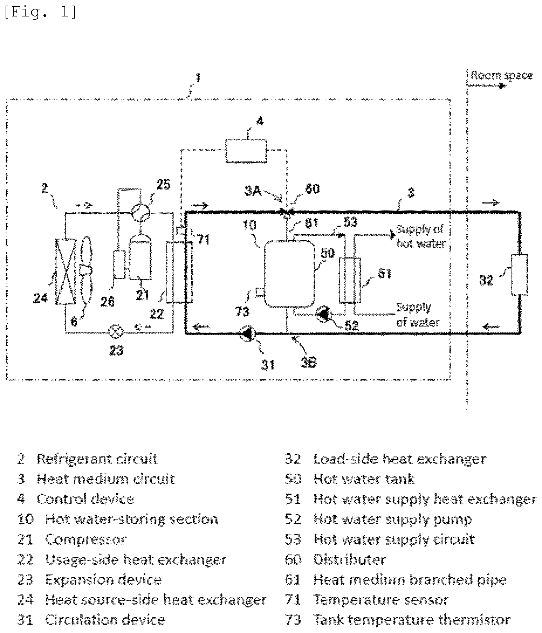

Fig. 1 is a block diagram of a heating and hot water supply system in a first embodiment of the present invention, and shows a heating operation.

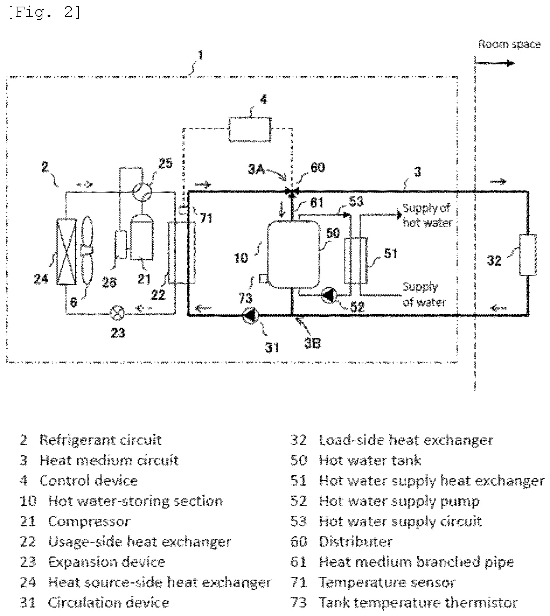

Fig. 2 is a block diagram of the heating and hot water supply system in the first embodiment of the invention, and shows simultaneous operations, i.e., a heating operation and a hot water-storing operation.

The heating and hot water supply system 1 in the first embodiment of the invention is composed of a refrigerant circuit 2, a heat medium circuit 3 and a hot water-storing section 10.

Solid lines show flowing directions of heat medium in the heat medium circuit 3, and dashed-dotted lines show flowing directions of refrigerant in the refrigerant circuit 2.

The refrigerant circuit 2 is formed by annularly connecting, to one another through a refrigerant pipe, a compressor 21 for compressing refrigerant, a usage-side heat exchanger 22 for heating heat medium by refrigerant which is compressed and becomes high temperature and high pressure, an expansion device 23 for decompressing refrigerant from high pressure to low pressure, and a heat source-side heat exchanger 24 in which refrigerant absorbs heat from air generated by a blower 6.

As the refrigerant, it is possible to use non-azeotropic mixed refrigerant such as R407C, pseudo-azeotropic refrigerant mixture such as R410A, and single refrigerant such as R32 and carbon dioxide.

An accumulator 26 is provided in the refrigerant pipe between the heat source-side heat exchanger 24 and the compressor 21. The accumulator 26 separate gas and liquid of refrigerant from each other. The refrigerant circuit 2 is provided with a four-way valve 25 which switches between flow paths of refrigerant. By switching the four-way valve 25, a discharge-side pipe of the compressor 21 is brought into communication with the heat source-side heat exchanger 24, and a defrosting operation for removing frost formed on the heat source-side heat exchanger 24 can be carried out.

A load-side heat exchanger 32 which is a radiator such as a floor heating panel is connected to the heat medium circuit 3.

Heat medium heated by refrigerant in the usage-side heat exchanger 22 is conveyed to the load-side heat exchanger 32 by a circulation device 31 which is a circulation pump, and after the heat medium radiates heat in the load-side heat exchanger 32, it returns to the usage-side heat exchanger 22. The heat medium circulates through the heat medium circuit 3.

As described above, in the heat medium circuit 3, the usage-side heat exchanger 22, the load-side heat exchanger 32 and the circulation device 31 are annularly connected to one another through a heat medium pipe, and heat medium circulates.

Water or antifreeze liquid is used as heat medium which circulates through the heat medium circuit 3.

The heat medium circuit 3 is provided with the hot water-storing section 10 in parallel to the usage-side heat exchanger 22. A connecting portion (branch current portion) 3A between the heat medium circuit 3 and the hot water-storing section 10 is provided with a distributer 60. At the branch current portion 3A, a portion of heat medium which flows out from the usage-side heat exchanger 22 is separated into the hot water-storing section 10.

The distributer 60 adjusts a distribution ratio which is a ratio between a flow rate of heat medium flowing out from the usage-side heat exchanger 22 which flows into the hot water-storing section 10, and a flow rate of the heat medium which flows into the load-side heat exchanger 32.

The hot water-storing section 10 shown in Figs. 1 and 2 is a hot water tank 50 in which heat medium heated by refrigerant in the usage-side heat exchanger 22 is directly stored. The hot water tank 50 is connected to the heat medium circuit 3 through the heat medium branched pipe 61. The distributer 60 is provided on an inflow side of the heat medium of the hot water tank 50.

The hot water tank 50 is provided in the heat medium circuit 3 in parallel to the usage-side heat exchanger 22.

That is, the distributer 60 includes a mechanism which changes an area ratio between an opening area through which the distributer 60 and the hot water-storing section 10 are in communication with each other, i.e., an opening area of the heat medium branched pipe 61 and an opening area of the heat medium circuit 3 leading to the load-side heat exchanger 32. By changing the area ratio, the distribution ratio can be adjusted.

The heating operation is carried out in such a manner that heat medium heated by refrigerant in the usage-side heat exchanger 22 radiates heat in the load-side heat exchanger 32. The hot water-storing operation is carried out in such a manner that heat medium heated by refrigerant in the usage-side heat exchanger 22 is stored in the hot water-storing section 10 (hot water tank 50).

If the distributer 60 adjusts the distribution ratio, the control device 4 can execute an operation mode for carrying out the hot water-storing operation when the heating operation is carried out.

The hot water tank 50 is provided with a tank temperature thermistor 73. The hot water-storing operation for storing hot water in the hot water tank 50 is carried out when detected temperature detected by the tank temperature thermistor 73 is equal to or lower than predetermined temperature. When the detected temperature detected by the tank temperature thermistor 73 is equal to or lower than the predetermined temperature, the control device 4 determines that hot water in the hot water tank 50 is insufficient.

The heating operation is started by the control device 4 when a user requires the operation by a remote controller (not shown).

The heat medium circuit 3 includes a temperature sensor 71 on the side of an outlet of the usage-side heat exchanger 22. The temperature sensor 71 detects temperature of heat medium which flows out from the usage-side heat exchanger 22. The control device 4 sets a distribution ratio of the distributer 60 based on temperature detected by the temperature sensor 71.

According to the heating and hot water supply system 1 shown in Figs. 1 and 2, the distributer 60 is placed in a branch current portion 3A in the heat medium circuit 3.

According to this, when the operation mode for carrying out the heating operation and the hot water-storing operation at the same time is executed, the distributer 60 can adjust the ratio of the flow rate of heat medium flowing out from the usage-side heat exchanger 22 which flows toward the hot water-storing section 10, i.e., the flow rate of the heat medium flowing toward the heat medium branched pipe 61 and the flow rate of the heat medium flowing toward the load-side heat exchanger 32. Hence, it is possible to provide the heating and hot water supply system 1 in which usability and comfort are enhanced.

In the heat medium circuit 3, the circulation device 31 is placed between the connecting portion (branch current portion) 3B and the usage-side heat exchanger 22. The heat medium flowing out from the load-side heat exchanger 32 and the heat medium flowing out from the hot water-storing section 10 (heat medium branched pipe 61) join up with each other at the connecting portion (branch current portion) 3B.

According to this, low temperature heat medium after it radiates heat in the load-side heat exchanger 32 and low temperature heat medium after it is utilized for supplying hot water in the hot water-storing section 10 flow into the circulation device 31. Therefore, it is possible to enhance the endurance of the circulation device 31.

The heat exchanger hot water tank 50 is a temperature stratified type tank in which high temperature heat medium stays in its upper portion. The hot water supply heat exchanger 51 is connected to the hot water tank 50 through a hot water supply circuit 53. The heat exchanger hot water supply circuit 53 is provided with the hot water supply pump 52. A hot water supply terminal is opened by operation of a user. When supply of hot water is required, the hot water supply pump 52 is operated. By operating the hot water supply pump 52, high temperature heat medium flows into the hot water supply heat exchanger 51 from an upper portion of the hot water tank 50, low temperature heat medium after it radiates heat in the hot water supply heat exchanger 51 returns to a lower portion of the hot water tank 50.

In the hot water supply heat exchanger 51, flow of water and flow of heat medium are opposed to each other. Low temperature water is heated by heat medium in the hot water supply heat exchanger 51 and becomes hot water, and it is supplied.

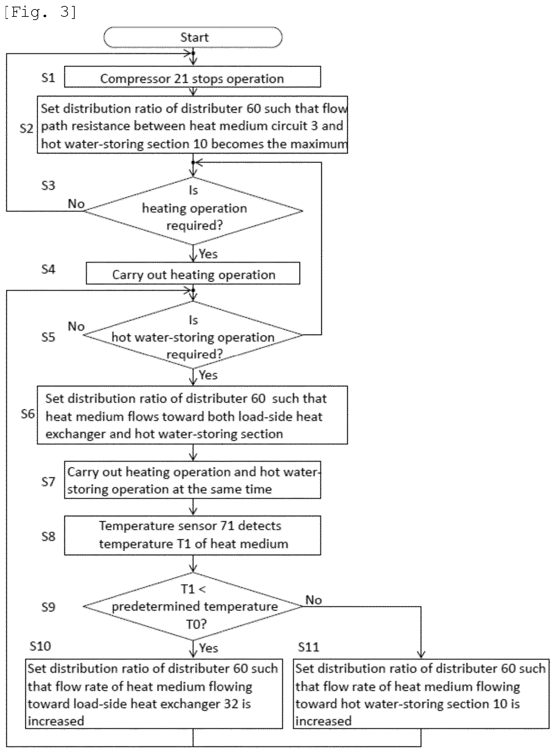

Fig. 3 is a flowchart of operation control of the heating and hot water supply system in the first embodiment of the invention.

A case where the operation mode is executed will be described below based on Fig. 3. In the operation mode, the heating operation in which heat medium heated by refrigerant in the usage-side heat exchanger 22 radiates heat in the load-side heat exchanger 32, and the hot water-storing operation for storing hot water in the hot water tank 50 of the hot water-storing section 10 are carried out at the same time.

First, during a period when the operation of the compressor 21 is stopped (step S1), the control device 4 sets a distribution ratio of the distributer 60 such that a flow path resistance between the heat medium circuit 3 and the hot water-storing section 10 (heat medium branched pipe 61) becomes maximum (step S2).

That is, the control device 4 sets the distribution ratio of the distributer 60 such that the opening area of the hot water-storing section 10, i.e., the opening area of the heat medium branched pipe 61 becomes the minimum, and the opening area of the heat medium circuit 3 leading to the load-side heat exchanger 32 becomes maximum.

According to this, during a period when the compressor 21 is stopped, since the flow path resistance between the heat medium circuit 3 and the hot water-storing section 10 is extremely large by the distributer 60, it is possible to suppress the outflow of high temperature heat medium in the hot water-storing section 10 into the low temperature heat medium circuit 3, and it is possible to provide the heating and hot water supply system having excellent energy efficiency.

Next, the control device 4 determines whether the heating operation is required (step S3). When the heating operation is not required, the current state is maintained, and if the heating operation is required, the circulation device 31, the compressor 21 and the blower 6 are operated to carry out the heating operation (step S4).

Next, the control device 4 determines whether the hot water-storing operation is required (step S5). When the hot water-storing operation is not required, the current state is maintained. When the hot water-storing operation is required, the distribution ratio of the distributer 60 is set such that heat medium flows toward both the load-side heat exchanger 32 and the hot water-storing section 10 (heat medium branched pipe 61) (step S6), and the heating operation and the hot water-storing operation are carried out at the same time (step S7).

heat exchanger temperature sensor 71 provided at an outlet of heat medium of the usage-side heat exchanger 22 detects heat medium temperature T1 of heat medium which flows out from the usage-side heat exchanger 22 (step S8), and compares the heat medium temperature T1 and predetermined temperature T0 which is preset with each other (step S9).

When the heat medium temperature T1 is lower than the predetermined temperature T0, it is determined that a radiation amount (heating ability) of the load-side heat exchanger 32 as compared with the heating load is small. Then, the control device 4 sets the distribution ratio of the distributer 60 such that the flow rate of heat medium flowing toward the load-side heat exchanger 32 is increased (step S10).

When the heat medium temperature T1 is equal to or higher than the predetermined temperature T0 on the other hand, it can be determined that the radiation amount (heating ability) of the load-side heat exchanger 32 as compared with the heating load is large, and it is determined that the heating operation can also be carried out by redundant heating ability while executing the hot water-storing operation to the hot water-storing section 10. Then, the control device 4 sets the distribution ratio of the distributer 60 such that the flow rate of heat medium flowing toward the hot water-storing section 10 is increased (step S11).

The control device 4 keeps the current state until the hot water-storing operation is not required (step S5). When the hot water-storing operation is not required, it is determined whether the heating operation is required (step S3), and if the heating operation is not required, the compressor 21 of the refrigerant circuit 2 is stopped (step S1).

### (Second Embodiment)

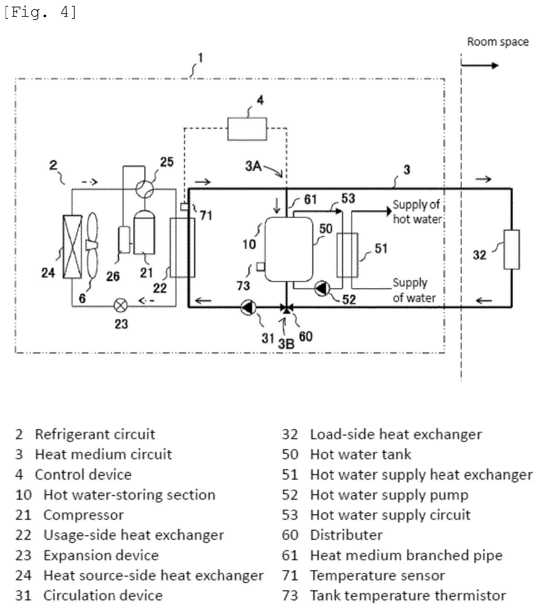

Fig. 4 is a block diagram of a heating and hot water supply system in a second embodiment of the invention, and shows simultaneous operations, i.e., a heating operation and a hot water-storing operation.

Different portions from those of the heating and hot water supply system 1 shown in Fig. 2 will be described below.

The distributer 60 is provided at a connecting portion (branch current portion) 3B between the heat medium circuit 3 and the hot water-storing section 10. The hot water tank 50 is connected to the heat medium circuit 3 through the heat medium branched pipe 61. The distributer 60 is provided on an outflow side of heat medium of the hot water tank 50. Heat medium which flows out from the load-side heat exchanger 32 and heat medium which flows out from the hot water-storing section 10 (heat medium branched pipe 61) join up with each other at the branch current portion 3B.

As described above, in the heating and hot water supply system 1 shown in Fig. 4, the distributer 60 is placed in the branch current portion 3B in the heat medium circuit 3.

Heat medium flows out from the hot water tank 50, and the same amount of heat medium heated by refrigerant in the usage-side heat exchanger 22 flows into the hot water tank 50.

According to this, low temperature heat medium after it radiates heat in the load-side heat exchanger 32 and low temperature heat medium after it is utilized for supplying hot water in the hot water-storing section 10 flow into the circulation device 31. Therefore, it is possible to enhance the endurance of the circulation device 31.

### (Third Embodiment)

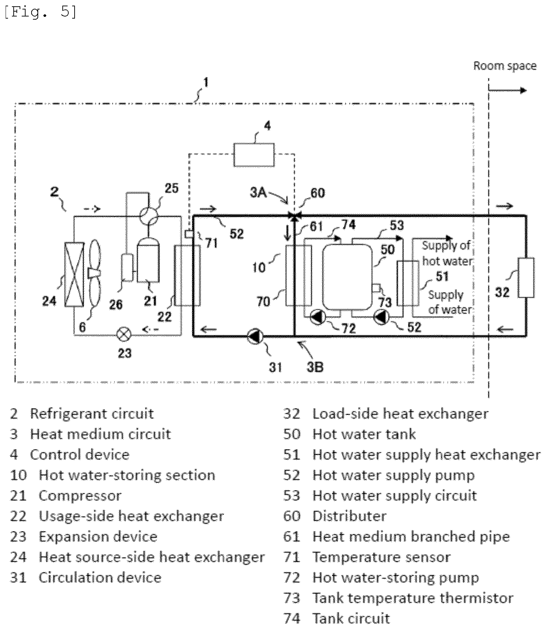

Fig. 5 is a block diagram of a heating and hot water supply system in a third embodiment of the present invention, and shows simultaneous operations, i.e., a heating operation and a hot water-storing operation.

Only different portions from those in the heating and hot water supply systems 1 shown in Figs. 2 and 4 will be described below.

A hot water-storing section 10 is composed of a hot water-storing heat exchanger 70 through which heat medium heated by a usage-side heat exchanger 22 flows, a hot water tank 50 for storing heat medium heated and produced by high temperature heat medium in the hot water-storing heat exchanger 70, and a tank circuit 74 which connects the hot water-storing heat exchanger 70 and the hot water tank 50 to each other and circulates heat medium between the hot water-storing heat exchanger 70 and the hot water tank 50.

Heat medium heated by refrigerant in the usage-side heat exchanger 22 flows through the heat medium branched pipe 61, and radiates heat to heat medium which flows through the tank circuit 74 in the hot water-storing heat exchanger 70. Low temperature heat medium in the hot water tank 50 flows through the tank circuit 74, the heat medium is heated in the hot water-storing heat exchanger 70, and the heat medium which becomes high temperature flows through the tank circuit 74 and is stored in the hot water tank 50.

The hot water-storing heat exchanger 70 and the heat medium branched pipe 61 placed in the hot water-storing heat exchanger 70 are provided in parallel to the usage-side heat exchanger 22.

The hot water tank 50 is provided with a tank temperature thermistor 73. The hot water-storing operation for storing hot water in the hot water tank 50 is carried out under such a condition that temperature detecte4d by the tank temperature thermistor 73 is equal to or lower than predetermined temperature. When the temperature detected by the tank temperature thermistor 73 is equal to or lower than the predetermined temperature, the control device 4 determines that hot water in the hot water tank 50 is insufficient, and the control device 4 sets the distribution ratio of the distributer 60 such that heat medium flows through the heat medium branched pipe 61.

If the hot water-storing operation is required and this operation is carried out, the circulation device 31, the compressor 21 and the blower 6 are operated, and heat medium flows into the heat medium branched pipe 61 of the hot water-storing heat exchanger 70.

By operating a hot water-storing pump 72, low temperature heat medium flows into the hot water-storing heat exchanger 70 from a lower portion of the hot water tank 50, the low temperature heat medium is heated by heat medium which flows through the heat medium branched pipe 61 in the hot water-storing heat exchanger 70, and the low temperature heat medium returns to an upper portion of the hot water tank 50.

Low temperature heat medium flowing through the tank circuit 74 from the lower portion of the hot water tank 50 flows in a direction opposed to high temperature heat medium which flows through the heat medium branched pipe 61.

If the hot water supply terminal is opened by operation of a user and supply of hot water is required, the hot water supply pump 52 is operated. By operating the hot water supply pump 52, high temperature heat medium flows toward the hot water supply heat exchanger 51 from the upper portion of the hot water tank 50, and low temperature heat medium after it radiates heat in the hot water supply heat exchanger 51 returns to the lower portion of the hot water tank 50.

In the hot water supply heat exchanger 51, flow of water and flow of heat medium are opposed to each other. Water in a low temperature state is heated by heat medium in the hot water supply heat exchanger 51 and becomes hot water and the hot water is supplied.

The distributer 60 may be placed on the branch current portion 3B where heat medium from the load-side heat exchanger 32 and heat medium from the side of the hot water-storing section 10 (heat medium branched pipe 61) join up with each other. The distributer 60 may be placed on the branch current portion 3A where the load-side heat exchanger 32 and the hot water-storing section 10 (heat medium branched pipe 61) join up with each other.

### [INDUSTRIAL APPLICABILITY]

As described above, the heating and hot water supply system of the present invention can carry out the heating operation and the hot water-storing operation at the same time, it is possible to enhance the usability and comfort, and the heating and hot water supply system can be applied to an air conditioner, a hot water supply system, a heater and the like.

### [EXPLANATION OF SYMBOLS]

- 1: heating and hot water supply system
- 2: refrigerant circuit
- 3: heat medium circuit
- 4: control device
- 10: hot water-storing section
- 21: compressor
- 22: usage-side heat exchanger
- 23: expansion device
- 24: heat source-side heat exchanger
- 31: circulation device
- 32: load-side heat exchanger
- 50: hot water tank
- 51: hot water supply heat exchanger
- 52: hot water supply pump
- 53: hot water supply circuit
- 60: distributer
- 61: heat medium branched pipe
- 70: hot water-storing heat exchanger
- 71: temperature sensor
- 72: hot water-storing pump
- 73: tank temperature thermistor
- 74: tank circuit

## Claims

1. A heating and hot water supply system including:
a refrigerant circuit (2) formed by annularly connecting a compressor (21), a usage-side heat exchanger (22), an expansion device (23) and a heat source-side heat exchanger (24) to one another, and refrigerant circulating through the refrigerant circuit (2);
a heat medium circuit (3) connected to a load-side heat exchanger (32), heat medium heated by the refrigerant in the usage-side heat exchanger (22) being conveyed to the load-side heat exchanger (32) by a circulation device (31), and the heat medium after it radiates heat in the load-side heat exchanger (32) returning to the usage-side heat exchanger (22);
a hot water-storing section (10) provided in the heat medium circuit (3) in parallel to the usage-side heat exchanger (22);
a control device (4), and
a temperature sensor (71) for detecting temperature of the heat medium flowing out from the usage-side heat exchanger (22),
wherein the heating and hot water supply system is configured to carry out a heating operation in which the heat medium heated by the refrigerant in the usage-side heat exchanger (22) radiates heat in the load-side heat exchanger (32), and a hot water-storing operation in which hot water is stored in the hot water-storing section (10) by the heat medium heated by the refrigerant in the usage-side heat exchanger (22),
the heating and hot water supply system includes a distributer (60) which is provided on a connecting portion between the heat medium circuit (3) and the hot water-storing section (10),
wherein the heating and hot water supply system is configured that the heat medium flows out from the usage-side heat exchanger (22), that the distributer (60) adjusts a distribution ratio of a flow rate of the heat medium flowing toward the hot water-storing section (10) and a flow rate of the heat medium flowing toward the load-side heat exchanger (32), and that the control device (4) sets the distribution ratio of the distributer (60 based on the temperature detected by the temperature sensor (71), and the heating and hot water supply system includes an operation mode for carrying out the hot water-storing operation when the heating operation is carried out.

2. The heating and hot water supply system according to claim 1, wherein the distributer (60) is placed on a branch current portion (3A, 3B) by which a portion of the heat medium flowing out from the usage-side heat exchanger (22) is separated into the hot water-storing section (10).

3. The heating and hot water supply system according to claim 1, wherein the distributer (60) is placed on a branch current portion (3A, 3B) where the heat medium flowing out from the load-side heat exchanger (32) and the heat medium flowing out from the hot water-storing section (10) join up with each other.

4. The heating and hot water supply system according to claim 1, wherein when the temperature detected by the temperature sensor (71) is smaller than a predetermined temperature, the control device (4) is configured to set the distribution ratio of the distributer (60) such that the flow rate of the heat medium flowing toward the load-side heat exchanger (32) is increased.

5. The heating and hot water supply system according to claim 1, wherein when the temperature detected by the temperature sensor (71) is equal to or higher than predetermined temperature, the control device (4) is configured to set the distribution ratio of the distributer (60) such that the flow rate of the heat medium flowing toward the hot water-storing section (10) is increased.

6. The heating and hot water supply system according to any one of claims 1 to 5, wherein during a period when the compressor (21) stops, the control device (4) is configured to set the distribution ratio of the distributer (60) such that flow path resistance between the heat medium circuit (3) and the hot water-storing section (10) becomes maximum.

7. The heating and hot water supply system according to any one of claims 1 to 2, wherein the circulation device (31) is placed between the usage-side heat exchanger (22) and a branch current portion (3B) where the heat medium flowing out from the load-side heat exchanger (32) and the heat medium flowing out from the hot water-storing section (10) join up with each other.

8. The heating and hot water supply system according to any one of claims 1 to 7 wherein the hot water-storing section (10) is composed of a hot water tank (50) which stores the heat medium heated by the refrigerant in the usage-side heat exchanger (22).

9. The heating and hot water supply system according to any one of claims 1 to 7 wherein the hot water-storing section (10) is composed of a hot water-storing heat exchanger (70) through which the heat medium heated by the refrigerant in the usage-side heat exchanger (22) flows, and a hot water tank (50) which stores hot water heated by the heat medium in the hot water-storing heat exchanger (70).

## Patentansprüche

1. Heiz- und Warmwasserversorgungssystem, umfassend:
einen Kältemittelkreislauf (2), der durch ringförmiges Verbinden eines Verdichters (21), eines nutzungsseitigen Wärmetauschers (22), einer Expansionsvorrichtung (23) und eines wärmequellenseitigen Wärmetauschers (24) miteinander gebildet ist, und ein Kältemittel, das durch den Kältemittelkreislauf (2) zirkuliert;
einen Wärmeträgerkreislauf (3), der mit einem lastseitigen Wärmetauscher (32) verbunden ist, wobei ein durch das Kältemittel in dem nutzungsseitigen Wärmetauscher (22) erwärmter Wärmeträger von einer Zirkulationsvorrichtung (31) zu dem lastseitigen Wärmetauscher (32) weitergeleitet wird und der Wärmeträger, nachdem er in dem lastseitigen Wärmetauscher (32) Wärme abgestrahlt hat, zu dem nutzungsseitigen Wärmetauscher (22) zurückkehrt;
einen Warmwasserspeicherabschnitt (10), der in dem Wärmeträgerkreislauf (3) parallel zu dem nutzungsseitigen Wärmetauscher (22) vorgesehen ist;
eine Steuervorrichtung (4), und
einen Temperatursensor (71) zum Erfassen der Temperatur des Wärmeträgers, der aus dem nutzungsseitigen Wärmetauscher (22) ausströmt,
wobei das Heiz- und Warmwasserversorgungssystem dazu eingerichtet ist, einen Heizbetrieb, bei dem der durch das Kältemittel in dem nutzungsseitigen Wärmetauscher (22) erwärmte Wärmeträger im lastseitigen Wärmetauscher (32) Wärme abstrahlt, und einen Warmwasserspeicherbetrieb durchzuführen, bei dem durch den von dem Kältemittel in dem nutzungsseitigen Wärmetauscher (22) erwärmten Wärmeträger Warmwasser in dem Warmwasserspeicherabschnitt (10) gespeichert wird,
wobei das Heiz- und Warmwasserversorgungssystem einen Verteiler (60) umfasst, der auf einem Verbindungsabschnitt zwischen dem Wärmeträgerkreislauf (3) und dem Warmwasserspeicherabschnitt (10) vorgesehen ist,
wobei das Heiz- und Warmwasserversorgungssystem derart gestaltet ist, dass der Wärmeträger aus dem nutzungsseitigen Wärmetauscher (22) ausströmt, dass der Verteiler (60) ein Verteilungsverhältnis eines Durchsatzes des zu dem Warmwasserspeicherabschnitt (10) strömenden Wärmeträgers und eines Durchsatzes des zu dem lastseitigen Wärmetauscher (32) strömenden Wärmeträgers anpasst und dass die Steuervorrichtung (4) das Verteilungsverhältnis des Verteilers (60) auf der Grundlage der von dem Temperatursensor (71) erfassten Temperatur einstellt, und das Heiz- und Warmwasserversorgungssystem eine Betriebsart zum Durchführen des Warmwasserspeicherbetriebs, wenn der Heizbetrieb durchgeführt wird, umfasst.

2. Heiz- und Warmwasserversorgungssystem nach Anspruch 1, wobei der Verteiler (60) auf einem Teilstromabschnitt (3A, 3B) platziert ist, durch den ein Teil des aus dem nutzungsseitigen Wärmetauscher (22) ausströmenden Wärmeträgers in den Warmwasserspeicherabschnitt (10) abgespalten wird.

3. Heiz- und Warmwasserversorgungssystem nach Anspruch 1, wobei der Verteiler (60) auf einem Teilstromabschnitt (3A, 3B) platziert ist, wo sich der aus dem lastseitigen Wärmetauscher (32) ausströmende Wärmeträger und der aus dem Warmwasserspeicherabschnitt (10) ausströmende Wärmeträger miteinander vereinen.

4. Heiz- und Warmwasserversorgungssystem nach Anspruch 1, wobei die Steuervorrichtung (4) für den Fall, dass die von dem Temperatursensor (71) erfasste Temperatur niedriger als eine vorgegebene Temperatur ist, dazu eingerichtet ist, das Verteilungsverhältnis des Verteilers (60) derart einzustellen, dass der Durchsatz des zum lastseitigen Wärmetauscher (32) strömenden Wärmeträgers erhöht wird.

5. Heiz- und Warmwasserversorgungssystem nach Anspruch 1, wobei die Steuervorrichtung (4) für den Fall, dass die von dem Temperatursensor (71) erfasste Temperatur gleich oder höher als eine vorgegebene Temperatur ist, dazu eingerichtet ist, das Verteilungsverhältnis des Verteilers (60) derart einzustellen, dass der Durchsatz des zum Warmwasserspeicherabschnitt (10) strömenden Wärmeträgers erhöht wird.

6. Heiz- und Warmwasserversorgungssystem nach einem der Ansprüche 1 bis 5, wobei die Steuervorrichtung (4) dazu eingerichtet ist, während eines Zeitraums, in dem der Verdichter (21) stillsteht, das Verteilungsverhältnis des Verteilers (60) derart einzustellen, dass der Strömungswegwiderstand zwischen dem Wärmeträgerkreislauf (3) und dem Warmwasserspeicherabschnitt (10) am höchsten wird.

7. Heiz- und Warmwasserversorgungssystem nach einem der Ansprüche 1 und 2, wobei die Zirkulationsvorrichtung (31) zwischen dem nutzungsseitigen Wärmetauscher (22) und einem Teilstromabschnitt (3B) platziert ist, wo sich der aus dem lastseitigen Wärmetauscher (32) ausströmende Wärmeträger und der aus dem Warmwasserspeicherabschnitt (10) ausströmende Wärmeträger miteinander vereinen.

8. Heiz- und Warmwasserversorgungssystem nach einem der Ansprüche 1 bis 7, wobei der Warmwasserspeicherabschnitt (10) aus einem Warmwasserbehälter (50) besteht, der den durch das Kältemittel in dem nutzungsseitigen Wärmetauscher (22) erwärmten Wärmeträger speichert.

9. Heiz- und Warmwasserversorgungssystem nach einem der Ansprüche 1 bis 7, wobei der Warmwasserspeicherabschnitt (10) aus einem Warmwasser speichernden Wärmetauscher (70), durch den der durch das Kältemittel in dem nutzungsseitigen Wärmetauscher (22) erwärmte Wärmeträger strömt, und einem Warmwasserbehälter (50) besteht, der Warmwasser speichert, das durch den Wärmeträger in dem Warmwasser speichernden Wärmetauscher (70) erwärmt wird.

## Revendications

1. Système de chauffage et d'alimentation en eau chaude comprenant :
un circuit à fluide frigorigène (2), formé par liaison annulaire d'un compresseur (21), d'un échangeur de chaleur côté utilisation (22), d'un dispositif d'expansion (23) et d'un échangeur de chaleur côté source de chaleur (24) les uns aux autres, et un fluide frigorigène circulant à travers le circuit à fluide frigorigène (2) ;
un circuit à fluide caloporteur (3) relié à un échangeur de chaleur côté charge (32), le fluide caloporteur chauffé par le fluide frigorigène dans l'échangeur de chaleur côté utilisation (22) étant transporté vers l'échangeur de chaleur côté charge (32) par un dispositif de circulation (31) et le fluide caloporteur, après avoir émis de la chaleur dans l'échangeur de chaleur côté charge (32), revenant à l'échangeur de chaleur côté utilisation (22) ;
une section de stockage d'eau chaude (10) disposée dans le circuit à fluide caloporteur (3) en parallèle à l'échangeur de chaleur côté utilisation (22) ;
un dispositif de commande (4) et
un capteur de température (71) destiné à détecter la température du fluide caloporteur s'écoulant hors de l'échangeur de chaleur côté utilisation (22),
le système de chauffage et d'alimentation en eau chaude étant conçu pour effectuer une opération de chauffage, dans laquelle le fluide caloporteur chauffé par le fluide frigorigène dans l'échangeur de chaleur côté utilisation (22) émet de la chaleur dans l'échangeur de chaleur côté charge (32), et une opération de stockage d'eau chaude, dans laquelle de l'eau chaude est stockée dans la section de stockage d'eau chaude (10) par le fluide caloporteur chauffé par le fluide frigorigène dans l'échangeur de chaleur côté utilisation (22),
le système de chauffage et d'alimentation en eau chaude comprenant un distributeur (60) qui est disposé sur une partie de liaison entre le circuit à fluide caloporteur (3) et la section de stockage d'eau chaude (10),
le système de chauffage et d'alimentation en eau chaude étant conçu en ce que le fluide caloporteur s'écoule hors de l'échangeur de chaleur côté utilisation (22), en ce que le distributeur (60) ajuste un rapport de distribution d'un débit du fluide caloporteur s'écoulant vers la section de stockage d'eau chaude (10) et un débit du fluide caloporteur s'écoulant vers l'échangeur de chaleur côté charge (32) et en ce que le dispositif de commande (4) règle le rapport de distribution du distributeur (60) sur la base de la température détectée par le capteur de température (71) et le système de chauffage et d'alimentation en eau chaude comprenant un mode de fonctionnement destiné à effectuer l'opération de stockage d'eau chaude lorsque l'opération de chauffage est effectuée.

2. Système de chauffage et d'alimentation en eau chaude selon la revendication 1, le distributeur (60) étant placé sur une partie de courant de ramification (3A, 3B) par laquelle une partie du fluide caloporteur s'écoulant hors de l'échangeur de chaleur côté utilisation (22) est séparée dans la section de stockage d'eau chaude (10).

3. Système de chauffage et d'alimentation en eau chaude selon la revendication 1, le distributeur (60) étant placé sur une partie de courant de ramification (3A, 3B) où le fluide caloporteur s'écoulant hors de l'échangeur de chaleur côté charge (32) et le fluide caloporteur s'écoulant hors de la section de stockage d'eau chaude (10) se rejoignent.

4. Système de chauffage et d'alimentation en eau chaude selon la revendication 1, dans lequel, lorsque la température détectée par le capteur de température (71) est inférieure à une température prédéterminée, le dispositif de commande (4) est conçu pour régler le rapport de distribution du distributeur (60) de telle sorte que le débit du fluide caloporteur s'écoulant vers l'échangeur de chaleur côté charge (32) est augmenté.

5. Système de chauffage et d'alimentation en eau chaude selon la revendication 1, dans lequel, lorsque la température détectée par le capteur de température (71) est égale ou supérieure à une température prédéterminée, le dispositif de commande (4) est conçu pour régler le rapport de distribution du distributeur (60) de telle sorte que le débit du fluide caloporteur s'écoulant vers la section de stockage d'eau chaude (10) est augmenté.

6. Système de chauffage et d'alimentation en eau chaude selon l'une quelconque des revendications 1 à 5, dans lequel, pendant une période où le compresseur (21) s'arrête, le dispositif de commande (4) est conçu pour régler le rapport de distribution du distributeur (60) de telle sorte que la résistance de trajet d'écoulement entre le circuit à fluide caloporteur (3) et la section de stockage d'eau chaude (10) devient maximale.

7. Système de chauffage et d'alimentation en eau chaude selon l'une quelconque des revendications 1 à 2, le dispositif de circulation (31) étant placé entre l'échangeur de chaleur côté utilisation (22) et une partie de courant de ramification (3B) où le fluide caloporteur s'écoulant hors de l'échangeur de chaleur côté charge (32) et le fluide caloporteur s'écoulant hors de la section de stockage d'eau chaude (10) se rejoignent.

8. Système de chauffage et d'alimentation en eau chaude selon l'une quelconque des revendications 1 à 7, la section de stockage d'eau chaude (10) étant composée d'un réservoir à eau chaude (50) qui stocke le fluide caloporteur chauffé par le fluide frigorigène dans l'échangeur de chaleur côté utilisation (22).

9. Système de chauffage et d'alimentation en eau chaude selon l'une quelconque des revendications 1 à 7, la section de stockage d'eau chaude (10) étant composée d'un échangeur de chaleur de stockage d'eau chaude (70) à travers lequel s'écoule le fluide caloporteur chauffé par le fluide frigorigène dans l'échangeur de chaleur côté utilisation (22) et d'un réservoir à eau chaude (50) qui stocke de l'eau chaude chauffée par le fluide caloporteur dans l'échangeur de chaleur de stockage d'eau chaude (70).
